# EUROPEAN PATENT SPECIFICATION

(11) **EP 3 323 295 B1**
(45) Date of publication and mention of the grant of the patent: **10.07.2019**
(21) Application number: 16199276.3
(22) Date of filing: 17.11.2016
(51) Int. Cl.: A21D 8/02, A21C 3/06, A21D 13/066

(54) **METHOD FOR PRODUCING A DOUGH PIECE**
VERFAHREN ZUR HERSTELLUNG EINES TEIGSTÜCKS
PROCÉDÉ DE PRODUCTION D'UN MORCEAU DE PÂTE

(43) Date of publication of application: 23.05.2018
(73) Proprietor: Radie B.V., 4104 BC Culemborg (NL)
(72) Inventor: VAN BLOKLAND, Johannes, Josephus, Antonius, 1251 BG Laren (NL)
(74) Representative: Patentwerk B.V.

(56) References cited:
- EP-A1- 0 319 221
- GB-A- 2 468 114
- JP-A- 2000 157 149
- US-A- 4 276 317
- US-A1- 2004 076 725
- US-B1- 6 468 569
- Anonymous: "French spiral herb bread recipe - All recipes UK", , 24 October 2015 (2015-10-24), pages 1-5, XP055343720, Retrieved from the Internet: URL:http://web.archive.org/web/20151024210 721/http://allrecipes.co.uk/recipe/10837/f rench-spiral-herb-bread.aspx [retrieved on 2017-02-08]
- DATABASE GNPD [Online] MINTEL; 1 February 2009 (2009-02-01), Anonymous: "Sundried tomato, pesto and cheese spiral bread", XP002767080, Database accession no. 1032538

## Description

The invention relates to a method for producing a dough piece suitable for being baked into a rounded bread. The invention further relates to a method for producing a rounded bread by applying the before-mentioned method.

Dough rounding is used to produce ball-shaped dough pieces suitable for being baked into rounded breads or buns.

US2004/076725 discloses a method for processing dough as part of a bread-baking process. The method involves rolling of a dough sheet to form a bar-like and therefore elongated dough piece. This bar-like dough piece is then cut into slices which are subsequently flipped such that the slices are positioned on a conveyor with one of the cutting surfaces facing down. Before being placed into a baking tin, the slices are outlined relative to each other by means of guide plates. In order to fit more dough slices in a single baking tin, the bar-like dough piece may be deformed by means of a roller that compresses the bar-like dough piece in a radial direction before being cut into individual slices.

GB2468114 discloses a process for making bread comprising separating dough pieces from a bulk dough, which pieces are then compressed into a flat disc after which they are rolled into a cylindrical shape and then pressed flat using a pressure board. As can be seen from the figures, just as in US2004/076725 the cylindrical dough pieces are pressed in a radial direction. Moreover GB2468114 does not disclose the positioning of the dough piece in an upright position, as a result of which the pressing action of the pressure board positioned above the conveyor compresses the dough pieces in said radial direction. As such, the subject-matter of claim 1 is also novel over GB2468114.

JP2000 15 71 49 discloses a method for pre-cutting Danish rolls in a radial direction before placement in a baking tin. JP2000 15 71 49 does not disclose arranging the rolled-up cylindrical dough pieces in an upright position such that their cylindrical axes point in a vertical direction substantially perpendicular a plane on which the dough pieces are supported. Moreover, no compression step is involved in the method disclosed by JP2000 15 71 49.

US 4 276 317 discloses a device and a method for cutting and shaping dough which, after being subjected to a final kneading operation, is shaped into a substantially bar-form continuous body by means of a stretching apparatus. Subsequently, the dough body is cut into pieces that may then be rolled, coiled or folded into cylindrical shape as shown in figure 6. US 4 276 317 herewith does not disclose the steps of arranging the curled up dough piece to an upright position, nor compressing said curled up dough piece in an axial direction.

EP 0 319 221 discloses a method for the preparation of pizza crusts, comprising forming one or more sheets of dough into a layered body. One disclosed method for doing this involves spirally winding of one large sheet of dough to obtain a log shape to obtain a large Swiss roll. The layered body is then cut into slices, after which the slices are pressed to decrease their thickness and to obtain a slice having an increased upper surface area. This pressing is performed when its layers are in a direction substantially perpendicular to the surface of the slide. EP 0 319 221 does not disclose a limiting of the expansion of the dough piece in a radial direction by a mould during pressing.

A known method for obtaining rounded dough pieces involves a rounding process wherein dough pieces are rolled on a surface or between multiple surfaces. Especially with sticky dough types, the surfaces interfacing with the dough piece become heavily polluted during this process. Pollution is unwanted in any circumstance, but especially in case of mass produced dough products, where pollution of the machine surfaces requires short cleaning intervals resulting in lower production yields. Commonly, sticking to the surface may be prevented by applying flour between the surface and the dough piece. This method however only works for conventional dough compositions. For the rounding of sticky dough types like gluten-free dough, large quantities of flour are needed to prevent sticking, which quantities result in an unwanted change in the composition and/or consistency of the dough pieces.

It is therefore a goal of this invention to provide for a method for obtaining dough pieces, especially made from sticky dough types, suitable for being baked into rounded breads or buns that does not lead unacceptable pollution of machine surfaces while retaining dough consistency and/or composition.

The invention thereto proposes a method for producing a dough piece, comprising the steps of: A) providing an elongated dough piece, B) curling up the dough piece into a cylindrical shape, C) arranging the curled up dough piece to an upright position wherein its cylinder axis is oriented substantially perpendicular to a support plane, and D) moulding the dough piece thereby compressing the dough piece in an axial direction. By using this method, a dough piece is obtained that obviates the need for a conventional rounding process but nonetheless takes a rounded shape during baking. The individual steps of the method can furthermore be performed without significantly polluting the dough interfacing surfaces, such that it becomes possible to extend the period between consecutive cleaning operations, reducing production down times. In addition, the method does not necessitate the need to use large quantities of flour to prevent sticking of the dough piece to the dough interfacing surfaces.

In a specification of the method according to the invention, step B) may comprise rolling the dough piece about an axis extending in a width direction of the dough piece, perpendicular to the direction of elongation of the dough piece. During the curling up, the elongated dough piece is thus rolled over its longitudinal side, which creates a dough piece having a compact cylindrical shape that is easy to handle and resembles most closely the final shape of the dough piece.

The method according to the invention may be further specified in that the elongated dough piece provided has a width substantially equal to the diameter of an arithmetic spiral having a curve length equal to the length of the elongated dough piece and a distance between successive turnings equal to the thickness of the elongated dough piece. During the curling up of a dough piece into a cylindrical shape, the ends of the cylinder will typically take the approximate form of an arithmetic spiral (also known as a Archimedean spiral). By maintaining the width to length/thickness ratio as specified, a cylindrical dough piece is obtained, having a height that approximately equals its diameter. In particular, herein the percentage difference between the height and the diameter is preferably lower than 10% and more particular even lower than 5%.

The method may further comprise sprinkling the dough piece with flour prior to moulding to prevent or at least decrease the formation of pollution on the inside of the mould. Moreover, the application of flour prevents potential sticking of mould to the dough thereby aiding a smooth separation of the dough piece from the mould.

During moulding of the dough piece, the axial compression force exerted on the dough piece preferably introduces residual stresses into the dough piece, wherein the residual stresses decrease in outward radial direction of the dough piece. Typically, these residual stresses present in the dough will be reduced or relieved as a whole during a subsequent baking step. During baking, the dough piece will rise at a certain location to an extend proportional to the residual stresses present at said location. The presence of residual stresses that vary in magnitude in radial direction along the dough piece causes the dough to rise to a larger extend closer to the centre of the dough piece, thereby creating a rounded shape of the baked bread.

The moulding of the dough piece may comprise expanding the dough piece in a radial direction. It has been found that allowing the dough piece to expand in a radial direction will decrease the build-up of residual stresses introduced by the moulding process in an outward radial direction of the dough piece. This allows for the creation a residual stress distribution that will lead the dough piece to take a rounded shape during the baking process. More specifically the dough piece may be expanded in the radial direction to substantially the same extend as to which it is compressed in the axial direction. During experiments, it has appeared that this specific ratio of compression in axial direction and expansion in radial direction leads to a final shape of the dough piece that is best suited for being baked into a perfectly rounded bread. During the moulding, flour, or in the case of gluten-free dough corn starch or the like may be applied.

In order to control the radial expansion of the dough piece, the moulding of the dough piece may comprise limiting the expansion of the dough piece in a radial direction. Preferably, the expansion of the dough piece is limited by the mould itself, for example by a side wall of the mould. The mould may hereto be formed as a cylinder with a closed top and an open bottom.

The method according to the invention may further comprise transporting the dough piece in the direction of elongation of the dough piece, for example by the use of conveyors. More specifically, the dough piece may be transported between each of the processing stages defined in the method steps such that a continuous production of dough pieces becomes possible. It is hereby also possible to transport multiple dough pieces in parallel to effectively increase the throughput and output of the production process.

The method according to the invention is especially suited to follow or be part of a sheeting process, wherein dough is rolled out into a consistent dough sheet with an even thickness and cut into even elongated dough pieces.

The elongated dough piece provided may in a common case be a gluten-free dough piece having a composition x. Gluten-free dough is especially sticky and therefore in particular benefits from application of a method according to the invention.

The disclosure further relates to a dough piece produced using a method according to any of the previous claims. The main advantage of using a dough piece produced using a method according to the invention as a half-product in the production of a rounded bread is that pollution that normally occurs during rounding of the dough can be avoided or at least reduced while the rounded shape of final product (the rounded bread) is retained.

Furthermore, the invention relates to a method for producing a rounded bread comprising applying the above-described method for producing a dough piece, followed by subjecting the dough piece to a baking process. It is during the baking process that the dough piece produced using a method according to the invention through rising of the dough takes its final, rounded shape. As the dough piece produced by the method according to the invention will by itself assume a rounded shape through baking, it is preferred that the baking process enables the unbounded rising of the dough piece.

Finally, the disclosure relates to a rounded bread produced using the above-described method.

In order to further elucidate the invention, exemplary, non-limitative embodiments will be described with reference to the figures. In the figures:
- figure 1 shows a perspective view of an elongated dough piece,
- figure 2 shows a perspective view of a cylindrical shaped dough piece obtained by curling up the elongated dough piece as shown in figure 1,
- figure 3 shows a perspective view of a dough piece in an upright position obtained by flipping the curled up dough piece as shown in figure 2,
- figure 4 shows a perspective view of a compressed dough piece obtained by moulding the dough piece as shown in figure 3,
- figure 5 shows a sectional view of a dough piece during the moulding step, and
- figure 6 shows a perspective view of a rounded bread resulting from the baking process.

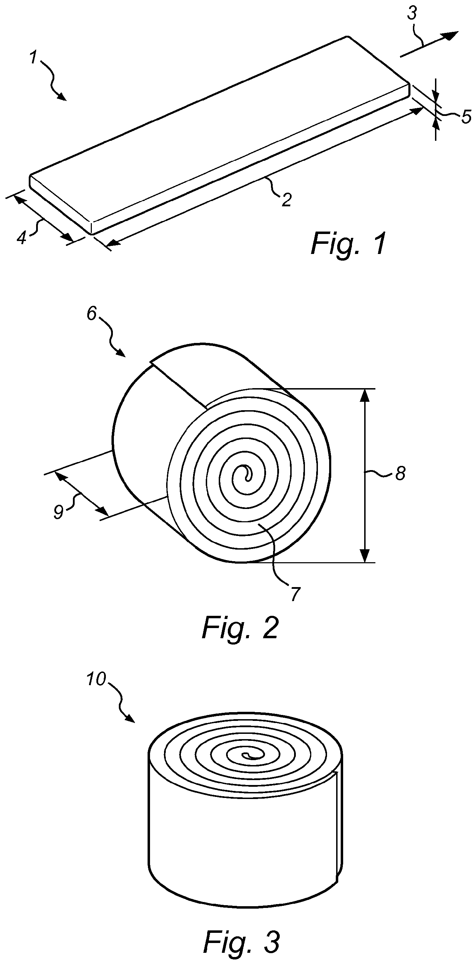

Figure 1 shows a perspective view of an elongated dough piece 1, having a length 2 defined in a direction of elongation 3, a width 4 perpendicular to the direction of elongation and a thickness 5.

Figure 2 shows a perspective view of a cylindrical shaped dough piece 6 obtained by curling up the elongated dough piece as shown in figure 1 over its longitudinal side in its direction of elongation 3. The dough piece is hereby rolled about an axis extending in a width direction of the dough piece, perpendicular to its direction of elongation. The resulting dough piece 6 takes the shape of a cylinder with ends having the approximate form of an arithmetic spiral 7. The cylinder furthermore has a diameter 8 and a height 9 that equals the width 4 of the elongated dough piece 1, wherein the percentage difference between the height 9 and the diameter 8 is lower than 5%.

Figure 3 shows a perspective view of an upright dough piece 10 obtained by flipping cylindrical shaped dough piece 6 as shown in figure 2.

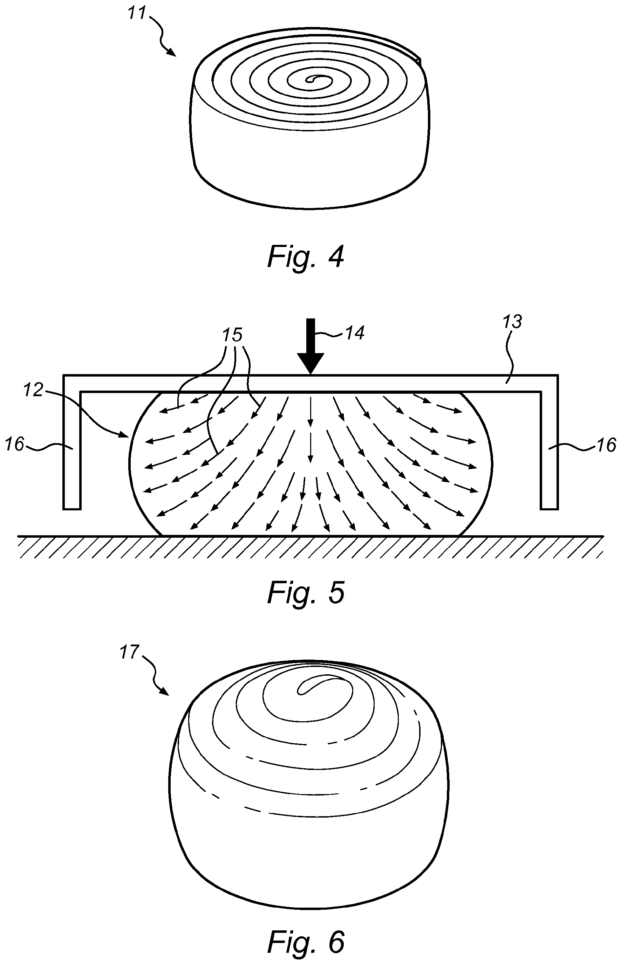

Figure 4 shows a perspective view of a compressed dough piece 11 obtained by moulding the upright dough piece 10 as shown in figure 3. Due to a compression force exerted on the dough piece in an axial direction, the dough piece compressed in an axial direction and expanded in a radial direction.

Figure 5 shows a sectional view of a dough piece 12 during the moulding step. A mould 13 is placed over the dough piece 12, after which a compressive force 14 is exerted on the dough piece 12 in an axial direction. This compressive force 14 introduces internal forces or stresses 15 within the dough piece 12, that cause the dough piece to extend in a radial direction. After removing the compressive force 14 by lifting the mould 13, residual stresses remain present in the dough piece, which residual stresses typically decrease in an outward radial direction of the dough piece due to the radial expansion. The mould 13 is provided with a side wall 16 to limit expansion of the dough piece up to a certain extend. Before the mould 13 is placed on the dough piece 12, the dough piece is typically sprinkled with flour or corn starch to prevent sticking of the mould to the dough piece.

Figure 6 shows a perspective view of a rounded bread 17 resulting from the baking process. During the baking process, the compressed dough piece 11 of figure 4 rises, at least in part by the residual stresses present in de dough piece after the moulding step, to a final, rounded shape.

## Claims

1. Method for producing a dough piece, comprising the steps of:
A) providing an elongated dough piece,
B) curling up the dough piece into a cylindrical shape,
C) arranging the curled up dough piece to an upright position wherein its cylinder axis is oriented substantially perpendicular to a support plane, and
D) moulding the dough piece by compressing the dough piece in an axial direction,
wherein step D) comprises limiting the expansion of the dough piece in a radial direction by the mould.

2. Method according to claim 1, wherein step B) comprises rolling the dough piece about an axis extending in a width direction of the dough piece, perpendicular to the direction of elongation of the dough piece.

3. Method according to claim 2, wherein step A) comprises providing an elongated dough piece having a width substantially equal to the diameter of an arithmetic spiral having a curve length equal to the length of the elongated dough piece and a distance between successive turnings equal to the thickness of the elongated dough piece.

4. Method according to any of the preceding claims, comprising sprinkling the dough piece with strewing material prior to step D).

5. Method according to any of the preceding claims, wherein step D) comprises expanding the dough piece in a radial direction thereby introducing residual stresses into the dough piece, wherein the residual stresses decrease in outward radial direction of the dough piece.

6. Method according to any of the preceding claims, comprising transporting the dough piece in the direction of elongation of the dough piece.

7. Method according to any of the preceding claims, wherein step A) comprises providing a gluten-free bread dough piece.

8. Method for producing a rounded bread comprising applying a method for producing a dough piece according to any of the claims 1-7 followed by subjecting the dough piece to a baking process.

9. Method according to claim 8, wherein the baking process comprises enabling unbounded rising of the dough piece.

## Patentansprüche

1. Verfahren zur Herstellung eines Teigstücks, umfassend folgende Schritte:
A) Bereitstellen eines länglichen Teigstücks,
B) Aufrollen des Teigstücks zu einer zylindrischen Form,
C) Anordnen des aufgerollten Teigstücks in eine aufrechte Position, wobei seine Zylinderachse im Wesentlichen senkrecht zu einer Stützebene ausgerichtet ist, und
D) Formen des Teigstücks durch Pressen des Teigstücks in axialer Richtung,
wobei Schritt D) das Begrenzen des Ausbreitens des Teigstücks in einer radialen Richtung durch die Form umfasst.

2. Verfahren nach Anspruch 1, wobei Schritt B) das Rollen des Teigstücks um eine Achse umfasst, die sich in einer Breitenrichtung des Teigstücks, senkrecht zur Richtung der Dehnung des Teigstücks, erstreckt.

3. Verfahren nach Anspruch 2, wobei Schritt A) das Bereitstellen eines länglichen Teigstücks mit einer Breite umfasst, die im Wesentlichen gleich dem Durchmesser einer arithmetischen Spirale ist, die eine Kurvenlänge aufweist, die gleich der Länge des länglichen Teigstücks ist, und einen Abstand zwischen aufeinanderfolgenden Drehungen, der gleich der Dicke des länglichen Teigstücks ist.

4. Verfahren nach einem der vorhergehenden Ansprüche, umfassend das Bestreuen des Teigstücks mit Streumaterial vor Schritt D).

5. Verfahren nach einem der vorhergehenden Ansprüche, wobei Schritt D) das Aufweiten des Teigstücks in radialer Richtung umfasst, wodurch Eigenspannungen in das Teigstück eingebracht werden, wobei die Eigenspannungen in radialer Richtung des Teigstücks nach außen abnehmen.

6. Verfahren nach einem der vorhergehenden Ansprüche, umfassend das Transportieren des Teigstücks in Richtung der Dehnung des Teigstücks.

7. Verfahren nach einem der vorhergehenden Ansprüche, wobei Schritt A) das Bereitstellen eines glutenfreien Brotteigstücks umfasst.

8. Verfahren zur Herstellung eines runden Brotes, umfassend die Anwendung eines Verfahrens zur Herstellung eines Teigstücks nach einem der Ansprüche 1-7, gefolgt von einem Backprozess des Teigstücks.

9. Verfahren nach Anspruch 8, wobei der Backprozess unbegrenztes Aufgehen des Teigstücks ermöglicht.

## Revendications

1. Procédé de production d'un morceau de pâte, comprenant les étapes suivantes:
A) fournir un morceau de pâte allongé,
B) enrouler le morceau de pâte sous une forme cylindrique,
C) placer le morceau de pâte enroulé dans une position droite dans laquelle son axe de cylindre est orienté sensiblement perpendiculairement à un plan de support, et
D) mouler le morceau de pâte en comprimant le morceau de pâte dans une direction axiale,
dans lequel l'étape D) comprend la limitation de l'expansion du morceau de pâte dans une direction radiale par le moule.

2. Procédé selon la revendication 1, dans lequel l'étape B) comprend l'enroulement du morceau de pâte autour d'un axe qui s'étend dans le sens de la largeur du morceau de pâte, perpendiculairement à la direction d'allongement du morceau de pâte.

3. Procédé selon la revendication 2, dans lequel l'étape A) comprend la fourniture d'un morceau de pâte allongé présentant une largeur sensiblement égale au diamètre d'une spirale arithmétique dont la longueur de courbe est égale à la longueur du morceau de pâte allongé, et une distance entre des spires successives est égale à l'épaisseur du morceau de pâte allongé.

4. Procédé selon l'une quelconque des revendications précédentes, comprenant le saupoudrage du morceau de pâte avec une matière de saupoudrage avant l'étape D).

5. Procédé selon l'une quelconque des revendications précédentes, dans lequel l'étape D) comprend l'expansion du morceau de pâte dans une direction radiale en introduisant de ce fait des contraintes résiduelles dans le morceau de pâte, dans lequel les contraintes résiduelles diminuent dans une direction radiale extérieure du morceau de pâte.

6. Procédé selon l'une quelconque des revendications précédentes, comprenant le transport du morceau de pâte dans la direction d'allongement du morceau de pâte.

7. Procédé selon l'une quelconque des revendications précédentes, dans lequel l'étape A) comprend la fourniture d'un morceau de pâte à pain sans gluten.

8. Procédé de production d'un pain arrondi comprenant l'exécution d'un procédé de production d'un morceau de pâte selon l'une quelconque des revendications 1 à 7, suivie par la soumission du morceau de pâte à un procédé de cuisson.

9. Procédé selon la revendication 8, dans lequel le procédé de cuisson comprend l'autorisation d'une levée illimitée du morceau de pâte.
